# EUROPÄISCHE PATENTSCHRIFT

(11) **EP 4 230 967 B1**
(45) Veröffentlichungstag und Bekanntmachung des Hinweises auf die Patenterteilung: **10.04.2024**
(21) Anmeldenummer: 22157890.9
(22) Anmeldetag: 22.02.2022
(51) Int. Cl.: G01D 5/245, G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE WITH THE SAME
ÉLÉMENT PALPEUR ET DISPOSITIF INDUCTIF DE MESURE DE POSITION POURVU DUDIT ÉLÉMENT PALPEUR

(43) Veröffentlichungstag der Anmeldung: 23.08.2023
(73) Patentinhaber: Dr. Johannes Heidenhain GmbH, 83301 Traunreut (DE)
(72) Erfinder: HEINEMANN, Christoph, 83236 Übersee (DE)

(56) Entgegenhaltungen:
- DE-A1-102008 017 857
- DE-A1-102017 219 931
- DE-A1-102018 220 671
- DE-A1-102019 219 764

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu zwei mit unterschiedlicher Geschwindigkeit drehbaren Skalenelementen sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerspuren ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Insbesondere werden bei Antrieben von Robotern häufig induktive Positionsmesseinrichtungen als Messgeräte für die Bestimmung der Winkellage einer Antriebswelle und gleichzeitig für die exakte Bestimmung der Winkellage einer Abtriebswelle eingesetzt, wobei die Bewegung der Antriebswelle durch ein Untersetzungsgetriebe in die Abtriebswelle eingeleitet wird. In diesem Fall werden Winkelpositionen beziehungsweise Winkelstellungen mithilfe eines Abtastelements gemessen, welches eine Leiterplatte umfasst, die an beiden Seiten entsprechende Detektoreinheiten aufweist, so dass die jeweilige Winkelstellung von beidseitig der Leiterplatte drehbar angeordneten Skalenelementen bestimmt werden kann.

### STAND DER TECHNIK

In der JP 2006208239 A, insbesondere gemäß der dortigen Figur 6, ist eine Positionsmesseinrichtung mit zwei Rotoren, zwischen welchen ein Stator angeordnet ist, offenbart. Die dort beschriebene Positionsmesseinrichtung kommt beispielsweise in einer Mikrometerschraube zum Einsatz.

DE 10 2018 220671 A1 betrifft ebenfalls ein Abtastelement mit zwei Detektoreinheiten.

### ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Positionsmesseinrichtung zu schaffen, durch welches eine Bestimmung von Positionen beziehungsweise Winkelstellungen eines ersten und eines zweiten Skalenelements ermöglicht ist.

Diese Aufgabe wird erfindungsgemäß durch die Merkmale des Anspruches 1 gelöst.

Das Abtastelement, welches für eine induktive Positionsmesseinrichtung geeignet und bestimmt ist, umfasst eine Leiterplatte mit einer ersten Detektoreinheit und mit einer zweiten Detektoreinheit. Die erste Detektoreinheit weist eine erste Erregerspur, eine erste Empfängerspur und eine dritte Empfängerspur auf. Die zweite Detektoreinheit weist eine zweite Erregerspur, eine zweite Empfängerspur und eine vierte Empfängerspur auf. Die Leiterplatte weist eine geometrische Mittenebene auf, welche zwischen der ersten und der zweiten Detektoreinheit angeordnet ist. Weiterhin sind die Empfängerspuren um eine Achse in Umfangsrichtung umlaufend angeordnet, wobei die dritte Empfängerspur radial außen hinsichtlich der ersten Empfängerspur verläuft. Ebenso verläuft die zweite Empfängerspur radial außen im Hinblick auf die vierte Empfängerspur. Die erste Empfängerspur umfasst erste Empfängerleiterbahnen, die zweite Empfängerspur zweite Empfängerleiterbahnen, die dritte Empfängerspur dritte Empfängerleiterbahnen und die vierte Empfängerspur vierte Empfängerleiterbahnen. Die ersten, zweiten, dritten und vierten Empfängerleiterbahnen weisen jeweils einen periodischen Verlauf auf. Die dritte Empfängerspur ist so ausgebildet, dass diese entlang ihrer Erstreckung in Umfangsrichtung eine erste Lücke aufweist, die durch die dritten Empfängerleiterbahnen begrenzt ist. Ebenso weist die zweite Empfängerspur entlang ihrer Erstreckung in Umfangsrichtung eine zweite Lücke auf, die durch die zweiten Empfängerleiterbahnen begrenzt ist. Weiterhin umfasst die erste Detektoreinheit eine erste Anschlussleiterbahn, die mit einer der ersten Empfängerleiterbahnen elektrisch verbunden beziehungsweise kontaktiert ist und mit radialer Richtungskomponente durch die erste Lücke verläuft. Die zweite Detektoreinheit umfasst eine zweite Anschlussleiterbahn, die mit einer den vierten Empfängerleiterbahnen elektrisch verbunden ist und mit radialer Richtungskomponente durch die zweite Lücke verläuft. Die Anschlussleiterbahnen stellen insbesondere einen Verbindungsabschnitt zwischen den beiden innen liegenden ersten und vierten Empfängerleiterbahnen zu Bauteilen einer elektronischen Schaltung dar.

Im Hinblick auf eine Festlegung der räumlichem Anordnung des Erfindungsgegenstandes kann zunächst eine erste Richtung x definiert werden. Die erste Richtung x stellt diejenige Richtung dar, in welcher die gesuchte Position gemessen wird (Messrichtung). Da durch die Positionsmesseinrichtung jeweils bezogen auf eine Dreh- oder Schwenkbewegung um eine (Dreh-) Achse eine erste relative Winkelstellung zwischen dem ersten Skalenelement und dem Abtastelement gemessen werden soll und zugleich eine zweite Winkelstellung zwischen dem zweiten Skalenelement und dem Abtastelement, ist die erste Richtung x eine Umfangsrichtung beziehungsweise eine Tangentialrichtung. Zudem kann eine zweite Richtung y definiert werden, die orthogonal zur ersten Richtung x verläuft.

Orthogonal zur ersten Richtung x und gleichzeitig orthogonal zur zweiten Richtung y ist eine dritte Richtung z orientiert. Die dritte Richtung z verläuft parallel zur (Dreh-) Achse, um welche ein Skalenelement relativ zum Abtastelement drehbar ist. Zudem ist die dritte Richtung z orthogonal zur Mittenebene ausgerichtet. Die einzelnen Lagen der Leiterplatte sind in der dritten Richtung z zueinander versetzt angeordnet.

Üblicherweise sind die beiden größten Flächen einer Leiterplatte parallel zueinander orientiert. Die Mittenebene ist insbesondere in der Mitte zwischen diesen Leiterplattenflächen parallel zu den Flächen angeordnet, so dass insbesondere in der dritten Richtung z der Abstand zwischen einer Fläche der Leiterplatte zur Mittenebene genauso groß ist wie der Abstand zwischen der anderen Fläche der Leiterplatte zur Mittenebene.

In weiterer Ausgestaltung der Erfindung ist die erste Lücke in Umfangsrichtung versetzt zur zweiten Lücke angeordnet. Demnach liegen die beiden Lücken im Aufbau der Leiterplatte nicht übereinander.

Gemäß einer Weiterbildung der Erfindung ist die Leiterplatte mehrlagig ausgestaltet, wobei die erste Detektoreinheit in einer ersten Lage und in einer zweiten Lage der Leiterplatte angeordnet ist. Zudem ist die zweite Detektoreinheit in einer dritten Lage und in einer vierten Lage der Leiterplatte angeordnet. Insbesondere kann weiterhin die erste Anschlussleiterbahn wechselweise in der ersten Lage und in der zweiten Lage der Leiterplatte verlaufen. Alternativ oder ergänzend kann die zweite Anschlussleiterbahn wechselweise in der dritten Lage und in der vierten Lage verlaufen. Mit anderen Worten verläuft zumindest ein Abschnitt der ersten Anschlussleiterbahn in der ersten Lage und ein anderer Abschnitt der ersten Anschlussleiterbahn in der zweiten Lage. Eine analoge Betrachtung gilt für die zweite Anschlussleiterbahn.

Mit Vorteil umfasst die Leiterplatte elektronische Bauteile, wobei die zweite Detektoreinheit und zumindest eines der elektronischen Bauteile auf derselben Seite der Leiterplatte angeordnet sind.

Mit Vorteil sind die erste Erregerspur und die zweite Erregerspur mit einem Erregerstrom bestrombar, welcher üblicherweise eine zeitlich wechselnde Stromstärke aufweist (Wechselstrom oder Mischstrom). Der Erregerstrom ist mit Hilfe der elektronischen Bauteile generierbar, das heißt, dass dessen Verlauf von den elektronischen Bauteilen formbar ist. Nachdem ein physikalischer Zusammenhang zwischen der Stromstärke und der Spannungsstärke existiert, kann natürlich die gleiche Betrachtung auch für die Erregerspannung vorgenommen werden.

In vorteilhafter Weise ist das Abtastelement so ausgestaltet, dass die erste Erregerspur und die zweite Erregerspur elektrisch in Serie geschaltet sind.

In weiterer Ausgestaltung der Erfindung sind diejenigen Signale, die von einer oder mehreren der Empfängerspuren erzeugbar sind, mit Hilfe der elektronischen Bauteile, die insbesondere eine Auswerteschaltung bilden, weiterverarbeitbar.

Die elektronischen Bauteile können also Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

Mit Vorteil verlaufen die Empfängerspuren entlang der Umfangsrichtung beziehungsweise entlang der ersten Richtung x wie auch die Erregerspuren.

Mit Vorteil ist die erste Detektoreinheit, insbesondere die erste Anschlussleiterbahn über eine Durchkontaktierung mit dem zumindest einem elektronischen Bauteil elektrisch verbunden, wobei die Durchkontaktierung radial außerhalb der zweiten Empfängerspur angeordnet ist. In weiterer Ausgestaltung der Erfindung ist die Durchkontaktierung in elektrischem Kontakt zu einem der elektronischen Bauteile, so dass also insbesondere Signale, die durch die erste Detektoreinheit beziehungsweise deren Empfängerleiterbahnen erzeugt werden, über die Durchkontaktierung dem elektronischen Bauteil zuführbar sind. Die Durchkontaktierung kann insbesondere in der dritten Richtung z verlaufen.

In vorteilhafter Ausgestaltung der Erfindung ist die Durchkontaktierung als ein through hole via ausgeführt. Insbesondere ist die Durchkontaktierung durch eine durchgängige Bohrung durch die Leiterplatte hindurch hergestellt. Bevorzugt wird die Bohrung innenwandig mit einer Metallschicht, insbesondere mit einer Kupferschicht, versehen. Die obere und untere Kontaktstelle der Durchkontaktierung bilden einen elektrischen Kontakt mit Leiterbahnen, Leiterschichten oder elektronischen Bauteilen. Unter dem Begriff Durchkontaktierung ist im Folgenden auch eine Anordnung zu verstehen, bei der mehrere Bohrungen oder Hohlräume, die mit leitfähigem Material gefüllt oder beschichtet sind, versetzt (insbesondere in radialer Richtung oder in Umfangsrichtung) zueinander angeordnet sind. Häufig werden derartige Durchkontaktierungen auch als Staggered Vias bezeichnet.

In weiterer Ausgestaltung der Erfindung erstreckt sich die erste Lücke in Umfangsrichtung über eine erste Länge, wobei die dritten Empfängerleiterbahnen einen periodischen Verlauf mit einer dritten Periodenlänge λ3 aufweisen. Dabei gilt, dass die erste Länge größer oder gleich 1/8 der dritten Periodenlänge λ3 ist, also L1 (erste Länge) ≥ 1/8·λ3.

Mit Vorteil ist das Abtastelement so ausgestaltet, dass sich die zweite Lücke in Umfangsrichtung über eine zweite Länge erstreckt und die zweiten Empfängerleiterbahnen einen periodischen Verlauf mit einer zweiten Periodenlänge λ2 aufweisen. In diesem Fall gilt, dass die zweite Länge größer oder gleich 1/8 der zweiten Periodenlänge λ2 ist, also L2 (zweite Länge) ≥ 1/8·λ2.

In weiterer Ausgestaltung der Erfindung weisen die ersten Empfängerleiterbahnen einen periodischen Verlauf mit einer ersten Periodenlänge λ1 auf und die dritten Empfängerleiterbahnen einen periodischen Verlauf mit einer dritten Periodenlänge λ3. Die erste Periodenlänge λ1 ist kleiner oder gleich der dritten Periodenlänge λ3 (λ1 ≤ λ3). Zudem kann der periodische Verlauf der zweiten Empfängerleiterbahnen eine zweite Periodenlänge (λ2) aufweisen und die vierten Empfängerleiterbahnen mit einer vierten Periodenlänge (λ4). Dabei ist die erste Periodenlänge (λ1) kleiner oder gleich aller weiteren Periodenlängen λ2, λ3, λ4 also kleiner oder gleich der zweiten, dritten und vierten Periodenlänge (λ2, λ3, λ4).

Mit Vorteil ist die zweite Periodenlänge (λ2) kleiner oder gleich der vierten Periodenlänge (λ4).

In vorteilhafter Ausgestaltung der Erfindung sind die zweite Detektoreinheit und zumindest eines der elektronischen Bauteile auf derselben Seite der Leiterplatte angeordnet. Bei dieser Bauweise befinden sich also die zweite Detektoreinheit und das elektronische Bauteil in gleicher Richtung versetzt zur Mittenebene, so dass die Mittenebene nicht zwischen der zweiten Detektoreinheit und dem elektronischen Bauteil angeordnet ist.

In weiterer Ausgestaltung der Erfindung weist die erste Detektoreinheit eine dritte Erregerspur und die zweite Detektoreinheit eine vierte Erregerspur auf.

In vorteilhafter Ausgestaltung sind eine erste Abschirmschicht in einer fünften Lage und eine zweite Abschirmschicht in einer sechsten Lage der Leiterplatte angeordnet. Die Mittenebene liegt zwischen der ersten Abschirmschicht und der zweiten Abschirmschicht, so dass also die Abschirmschichten beidseits der Mittenebene angeordnet sind.

Die Mittenebene kommt bezogen auf die dritte Richtung z zwischen der ersten Detektoreinheit und der ersten Abschirmschicht zu liegen. Folglich gilt ebenso, dass die Mittenebene bezogen auf die dritte Richtung z zwischen der zweiten Detektoreinheit und der zweiten Abschirmschicht zu liegen kommt beziehungsweise gilt, dass die zweite Detektoreinheit und die zweite Abschirmschicht beidseits der Mittenebene angeordnet sind.

Gemäß einem weiteren Aspekt umfasst die Erfindung auch eine induktive Positionsmesseinrichtung mit dem Abtastelement sowie einem ersten Skalenelement und einem zweiten Skalenelement. Die Skalenelemente sind in der dritten Richtung z (orthogonal zur Mittenebene) beabstandet, beidseits der Leiterplatte angeordnet.

Mit Vorteil weist das erste Skalenelement einen ersten Durchmesser D1 auf und das zweite Skalenelement einen zweiten Durchmesser d2, wobei der erste Durchmesser D1 größer ist als der zweite Durchmesser d2 (D1 > d2).

Weiterhin können die Skalenelemente um eine gemeinsame Achse relativ zum Abtastelement drehbar angeordnet sein.

Zudem kann zumindest eines der elektronischen Bauteile von der Achse weiter beabstandet angeordnet sein als die Außenkontur des zweiten Skalenelements. Das zumindest eine elektronische Bauteil ist dann also radial außerhalb des zweiten Skalenelements angeordnet.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine perspektivische Ansicht einer Positionsmesseinrichtung umfassend ein Abtastelement und ein erstes Skalenelement sowie ein zweites Skalenelement,
- Figur 2: eine Draufsicht auf eine erste Seite des Abtastelements,
- Figur 3: eine Detailansicht auf die erste Seite des Abtastelements,
- Figur 4: eine Draufsicht auf eine zweite Seite des Abtastelements
- Figur 5: eine Detailansicht auf die zweite Seite des Abtastelements,
- Figur 6: ein Detailschnitt P - P durch das Abtastelement,
- Figur 7: eine Draufsicht auf ein erstes Skalenelement,
- Figur 8: eine Draufsicht auf ein zweites Skalenelement.

### BESCHREIBUNG DER AUSFÜHRUNGSFORMEN

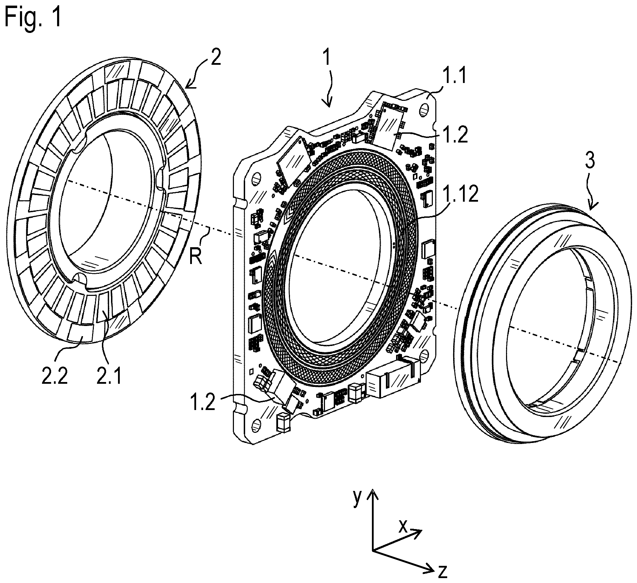

Die Erfindung wird gemäß der Figur 1 anhand einer Positionsmesseinrichtung beschrieben, welche ein Abtastelement 1 aufweist, das sowohl zur Erfassung einer Winkelstellung eines ersten Skalenelements 2 als auch einer Winkelstellung eines zweiten Skalenelements 3 verwendet werden kann. Beide Skalenelemente 2, 3 sind um eine Achse R relativ zum Abtastelement 1 drehbar angeordnet. Eine derartige Positionsmesseinrichtung kann beispielsweise in einer Antriebseinrichtung eines Roboters verwendet werden. Das zweite Skalenelement 3 ist dann etwa mit einer Antriebswelle eines Motors drehfest verbunden. Diese ist wiederum mit einem Untersetzungsgetriebe verbunden, welches eine Abtriebswelle aufweist. Mit dieser Abtriebswelle dreht sich das erste Skalenelement 2. Auf diese Weise kann beispielsweise eine Winkelstellung zur Kommutierung des Motors mit Hilfe des zweiten Skalenelements 3 und eine vergleichsweise hochgenaue Winkelstellung zur Positionierung des Roboters mit Hilfe des ersten Skalenelements 2 durchgeführt werden.

Das Abtastelement 1 umfasst eine Leiterplatte 1.1, welche mehrere Lagen aufweist, sowie elektronische Bauteile 1.2, die auf der Leiterplatte 1.1 montiert sind. Das Abtastelement 1 dient zur Abtastung des ersten Skalenelements 2 und gleichzeitig zur Abtastung des zweiten Skalenelements 3. Im vorgestellten Ausführungsbeispiel sind elektronische Bauteile 1.2 nur auf der zweiten Seite montiert. Alternativ oder ergänzend könnte aber auch die erste Seite der Leiterplatte 1.1 mit elektronischen Bauteilen bestückt werden.

Zur Bestimmung der Winkelinformationen sind auf einer ersten Seite der Leiterplatte 1.1 eine erste Detektoreinheit 1.11 und auf einer zweiten Seite der Leiterplatte 1.1 eine zweite Detektoreinheit 1.12 angeordnet. In der Figur 1 ist die zweite Seite der Leiterplatte 1.1 mit der zweiten Detektoreinheit 1.12 zu sehen.

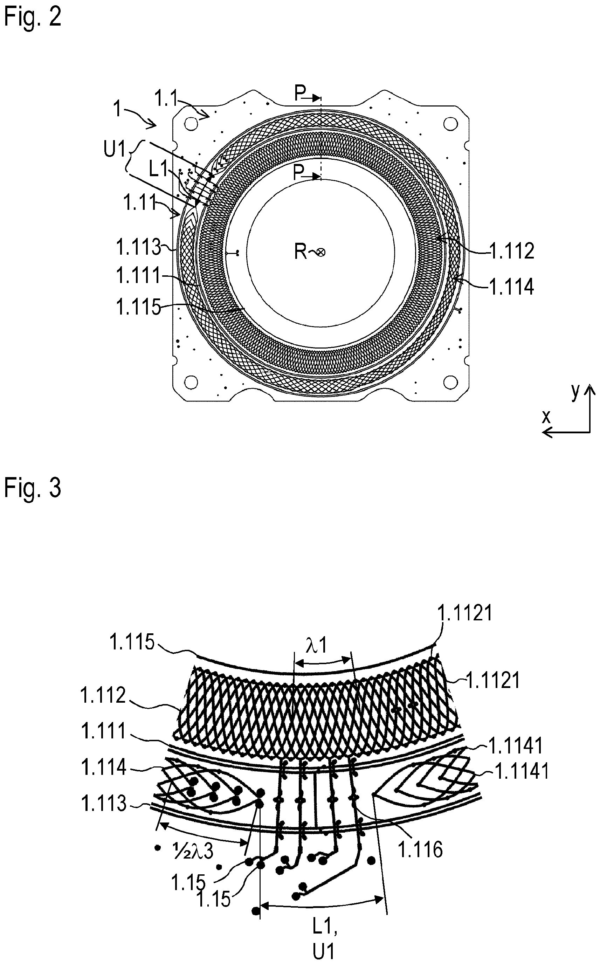

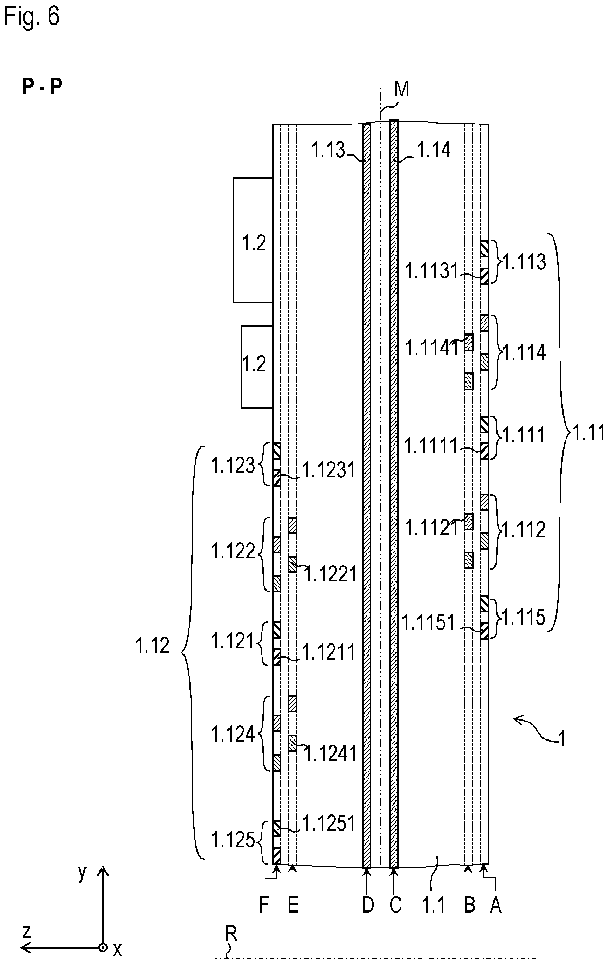

In den Figuren 2 und 3 (die Figur 3 ist eine vergrößerte Detailansicht der ersten Detektoreinheit 1.11 gemäß der Figur 2) ist die erste Seite der Leiterplatte 1.1 dargestellt unter anderem mit der ersten Detektoreinheit 1.11, die sich in einer äußeren ersten Lage A der Leiterplatte 1.1 und in einer zweiten Lage B der Leiterplatte 1.1 befindet (siehe Figur 6). Die erste Detektoreinheit 1.11 umfasst eine erste Erregerspur 1.111, eine erste Empfängerspur 1.112, eine dritte Erregerspur 1.113, eine dritte Empfängerspur 1.114 und eine fünfte Erregerspur 1.115. Die erste Empfängerspur 1.112 umfasst erste Empfängerleiterbahnen 1.1121 und die dritte Empfängerspur 1.114 umfasst dritte Empfängerleiterbahnen 1.1141. Die erste und die dritte Empfängerspur 1.112, 1.114 sind um die Achse R in Umfangsrichtung umlaufend angeordnet, wobei die dritte Empfängerspur 1.114 radial außen bezüglich der ersten Empfängerspur 1.112, also radial außerhalb der ersten Empfängerspur 1.112, verläuft.

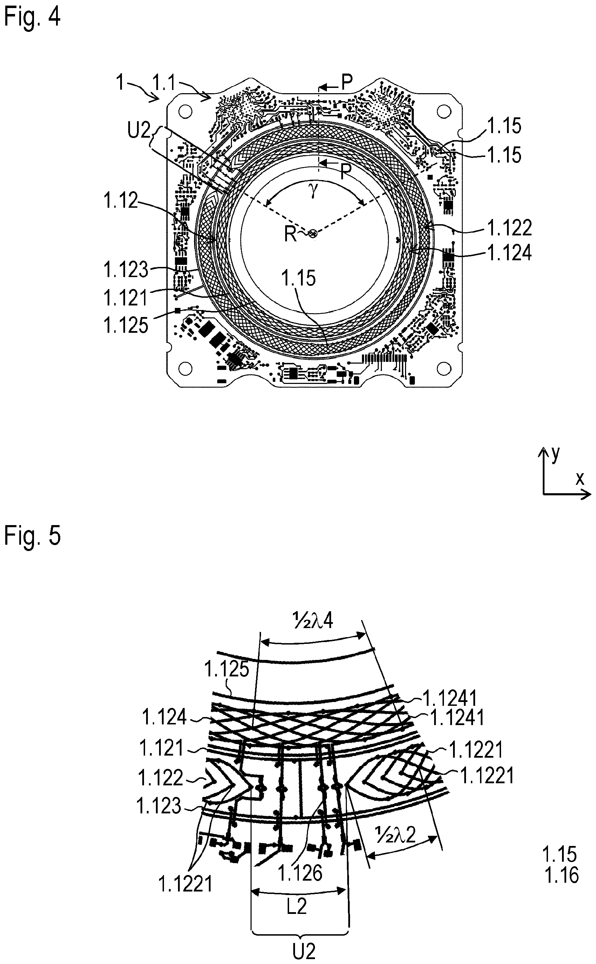

In den Figuren 4 und 5 ist die Leiterplatte 1.1 von der anderen Seite gezeigt, so dass die zweite Detektoreinheit 1.12 sichtbar ist. Die Figur 5 zeigt ein Detail der zweiten Detektoreinheit 1.12 in Vergrößerung. In den Figuren 4 und 5 sind unter anderem diejenigen Strukturen der zweiten Detektoreinheit 1.12 gezeigt, die sich in der äußeren vierten Lage F der Leiterplatte 1.1 und in einer dritten Lage E der Leiterplatte 1.1 befinden. Die zweite Detektoreinheit 1.12 umfasst eine zweite Erregerspur 1.121, eine zweite Empfängerspur 1.122, eine vierte Erregerspur 1.123, eine vierte Empfängerspur 1.124 und eine sechste Erregerspur 1.125. Die zweite Empfängerspur 1.122 umfasst zweite Empfängerleiterbahnen 1.1221 und die vierte Empfängerspur 1.124 umfasst vierte Empfängerleiterbahnen 1.1241. Auch die erste und die dritte Empfängerspur 1.112, 1.114 sind um die Achse R in Umfangsrichtung umlaufend angeordnet, wobei die zweite Empfängerspur 1.122 radial außen bezüglich der vierten Empfängerspur 1.124 verläuft.

In der Figur 6 ist eine schematische Teilschnittdarstellung gemäß der Schnittlinie P-P durch das Abtastelement 1 beziehungsweise der Leiterplatte 1.1 gezeigt, wobei der Übersichtlichkeit halber auf eine Schraffur von elektrisch isolierendem Material der Leiterplatte 1.1 verzichtet wurde. Zudem ist die Teilschnittdarstellung der Figur 6 zur besseren Erläuterbarkeit des erfindungsgemäßen Abtastelements 1 nicht maßstabsgetreu ausgeführt. Die Leiterplatte 1.1 ist, wie oben bereits erwähnt, mehrlagig aufgebaut. Geometrisch betrachtet kann für die Leiterplatte 1.1 eine so genannte Mittenebene M definiert werden, die parallel zur ersten Seite beziehungsweise parallel zur zweiten Seite der Leiterplatte 1.1 mittig zwischen der ersten und zweiten Seite angeordnet ist. Zudem können die geometrischen Beziehungen der einzelnen Elemente zueinander mit Hilfe eines Koordinatensystems definiert werden. Dabei ist eine erste Richtung x diejenige Richtung, entlang welcher bestimmungsgemäß eine Positions- beziehungsweise Winkelmessung erfolgen soll. Im vorgestellten Ausführungsbeispiel entspricht die erste Richtung x der Umfangsrichtung. Die Achse R, um welche die Skalenelemente 2, 3 drehbar sind, verläuft parallel zu einer dritten Richtung z, die dritte Richtung z kann demnach hier auch als axiale Richtung definiert werden. Orthogonal zur dritten Richtung z und zur ersten Richtung x ist eine zweite Richtung y orientiert, die auch als radiale Richtung bezeichnet werden kann. Somit ist eine Ebene, die von der x- und y-Achse aufgespannt wird, parallel zur Mittenebene M orientiert und die dritte Richtung z sowie die Achse R verlaufen orthogonal zur Mittenebene M.

In der ersten Lage A der Leiterplatte 1.1 und in der zweiten Lage B der Leiterplatte 1.1 ist die erste Detektoreinheit 1.11 angeordnet, während in der dritten Lage E und in der vierten Lage F die zweite Detektoreinheit 1.12 angeordnet ist. Die erste Lage A ist der ersten Seite der Leiterplatte 1.1 am nächsten gelegen und die zweite Lage B ist der ersten Seite der Leiterplatte 1.1 am zweitnächsten gelegen. Gleiches gilt für die vierte Lage F und die dritte Lage E bezüglich der zweiten Seite der Leiterplatte 1.1.

Die Erregerspuren 1.111, 1.113, 1.115 der ersten Detektoreinheit 1.11 umfassen Erregerleiterbahnen 1.1111, 1.1131, 1.1151, die in der ersten Lage A verlaufen. Analog hierzu umfassen die Erregerspuren 1.121, 1.123, 1.125 der zweiten Detektoreinheit 1.12 Erregerleiterbahnen 1.1211, 1.1231, 1.1251 die in der vierten Lage F verlaufen.

Zudem umfasst die Leiterplatte 1.1 auch eine fünfte Lage D und eine sechste Lage C. In der fünften Lage D befindet sich eine erste Abschirmschicht 1.13 und in der sechsten Lage C eine zweite Abschirmschicht 1.14. Die Abschirmschichten 1.13, 1.14 sind hier vergleichsweise großflächige Kupferschichten. Diese weisen insbesondere in den Bereichen zwischen den Empfängerspuren 1.112, 1.114, 1.122, 1.124 keine Perforierungen oder Aussparungen auf, so dass ein Übersprechen zwischen den Empfängerspuren 1.112, 1.114 der ersten Detektoreinheit 1.11 und den Empfängerspuren 1.122, 1.124 der zweiten Detektoreinheit 1.12 unterbunden oder zumindest stak reduziert wird.

Die Erregerspuren 1.111, 1.113, 1.115 der ersten Detektoreinheit 1.11 umschließen die erste Empfängerspur 1.112 beziehungsweise die dritte Empfängerspur 1.114.

Die Erregerspuren 1.121, 1.123, 1.125 der zweiten Detektoreinheit 1.12 umschließen die zweite Empfängerspur 1.122 beziehungsweise die vierte Empfängerspur 1.124. Sowohl die Erregerspuren 1.111, 1.113, 1.115, 1.121, 1.123, 1.125 als auch die Empfängerspuren 1.112, 1.114, 1.122, 1.124 verlaufen entlang der Umfangsrichtung beziehungsweise entlang der ersten Richtung x.

Jede der Empfängerspuren 1.112, 1.114, 1.122, 1.124 umfasst im vorgestellten Ausführungsbeispiel jeweils Empfängerleiterbahnen 1.1121, 1.1141, 1.1221, 1.1241, die in Umfangsrichtung versetzt angeordnet sind, so dass diese dem Versatz entsprechend vier phasenverschobene Signale liefern können. In den Figuren sind diejenigen Empfängerleiterbahnen 1.1121, 1.1141, 1.1221, 1.1241, welche ein und derselben Empfängerspur 1.112, 1.114, 1.122, 1.124 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121 der ersten Detektoreinheit 1.11 mit Vias verbunden in unterschiedlichen Lagen der Leiterplatte 1.1, so dass an Kreuzungspunkten unerwünschte Kurzschlüsse vermieden werden. Das Gleiche gilt auch für die Empfängerleiterbahnen 1.1221, 1.1241 der zweiten Detektoreinheit 1.12. Wenngleich genau genommen jede der ersten und zweiten Empfängerleiterbahnen 1.1121, 1.1221 aus vielen Leiterstücken besteht, die jeweils auf zwei Ebenen beziehungsweise Lagen verteilt und aneinandergereiht sind, wird im Folgenden eine derartige Struktur zusammenfassend als eine Empfängerleiterbahn 1.1221, 1.1241 bezeichnet.

Die Empfängerleiterbahnen 1.1121, 1.1141, 1.1221, 1.1241 weisen einen räumlich periodischen Verlauf auf, der im Wesentlichen sinusförmig beziehungsweise sinusartig ausgestaltet ist. Was die erste Detektoreinheit 1.11 betrifft, weisen die ersten Empfängerleiterbahnen 1.1121 der ersten Empfängerspur 1.112 eine erste Periodenlänge λ1 auf und die dritten Empfängerleiterbahnen 1.1141 eine dritte Periodenlänge λ3. Im vorgestellten Ausführungsbeispiel ist gemäß der Figur 3 die erste Periodenlänge λ1 kleiner als die dritte Periodenlänge λ3 (λ1 < λ3 = 2·½λ3, Figur 3). Bezüglich der zweiten Detektoreinheit 1.12 (siehe die Figur 5) kann festgehalten werden, dass die zweiten Empfängerleiterbahnen 1.1221 der zweiten Empfängerspur 1.122 eine zweite Periodenlänge λ2 aufweist und die vierten Empfängerleiterbahnen 1.1241 eine vierte Periodenlänge λ4. Hier gilt, dass die zweite Periodenlänge λ2 kleiner ist als die vierte Periodenlänge λ4, insbesondere gilt mit Bezug auf die Figur 5: 2·½λ = λ2 < λ4 = 2·½λ4.

Im vorgestellten Ausführungsbeispiel sind innerhalb einer Empfängerspur 1.112, 1.114, 1.122, 1.124 benachbarte Empfängerleiterbahnen 1.1121, 1.1141, 1.1221, 1.1241 um 1/8 der vollen Sinusperiode beziehungsweise einer Periodenlänge λ1, λ2, λ3, λ4 (um π/4 oder 45° entlang der Umfangsrichtung oder ersten Richtung x) zueinander versetzt angeordnet. Die Empfängerleiterbahnen 1.1121, 1.1141, 1.1221, 1.1241 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

Wie in den Figuren 2 und 3 gezeigt, weist die dritte Empfängerspur 1.114 entlang ihrer Erstreckung in Umfangsrichtung (x-Richtung) eine erste Lücke U1 auf. Der Bereich der ersten Lücke U1 wird durch die dritten Empfängerleiterbahnen 1.1141 begrenzt, so dass sich also zwischen den begrenzenden Empfängerleiterbahnen 1.1141 keine Detektorstruktur befindet. In erster Näherung ist also die erste Lücke U1 ein Bereich, der geometrisch betrachtet ein Ringsektor ist. Der minimale Abstand L1 in Umfangsrichtung zwischen zwei dritten Empfängerleiterbahnen 1.1141 im Bereich der ersten Lücke U1 beträgt im vorgestellten Ausführungsbeispiel 5/8·λ3 (L1 = 5/8·λ3). Im Bereich der ersten Lücke U1 sind also keine periodisch verlaufenden dritten Empfängerleiterbahnen 1.1141 angeordnet. Hingegen verlaufen durch die erste Lücke U1 erste Anschlussleiterbahnen 1.116 mit radialer Richtungskomponente. Diese sind mit den ersten Empfängerleiterbahnen 1.1121 der weiter innen liegenden ersten Empfängerspur 1.112 elektrisch verbunden und dienen dazu die empfangenen Signale nach außen weiterzuleiten. Zur Vermeidung von Einkopplungen von Störungen im Bereich der ersten Anschlussleiterbahnen 1.116 verlaufen diese in z-Richtung übereinander und abschnittsweise im Wechsel in der ersten Lage A und in der zweiten Lage B der Leiterplatte 1.1.

Zudem weist die Leiterplatte 1.1 Durchkontaktierungen 1.15 auf. Die erste Anschlussleiterbahnen 1.116 enden an den Durchkontaktierungen 1.15, die radial außerhalb der dritten Empfängerspur 1.114 angeordnet sind. Die Durchkontaktierungen 1.15 sind hier jeweils als ein through hole via ausgeführt und durchdringen demnach die Leiterplatte 1.1 über deren komplette Dicke. Somit verlaufen die Durchkontaktierungen 1.15 parallel zur dritten Richtung z. Die Durchkontaktierungen 1.15 sind auf der zweiten Seite der Leiterplatte 1.1, also auf der Seite der zweiten Detektoreinheit 1.12, radial außerhalb der zweiten Empfängerspur 1.122 angeordnet. Auf dieser Seite befinden sich die elektronischen Bauteile 1.2. Mit Hilfe der Durchkontaktierung 1.15, werden erste Empfängerleiterbahnen 1.1121 der ersten Empfängerspur 1.112 mit einem elektronischen Bauteil 1.2, das jenseits der Mittenebene M angeordnet ist, elektrisch verbunden. Über Leiterbahnen wird ein elektrischer Kontakt zum elektronischen Bauteil 1.2 hergestellt. Somit sind die ersten Empfängerleiterbahnen 1.1121 über die Anschlussleiterbahnen 1.116 und die Durchkontaktierungen 1.15 mit den elektronischen Bauteilen 1.2 elektrisch verbunden.

Gemäß den Figuren 4 und 5 weist die zweite Empfängerspur 1.122 entlang ihrer Erstreckung in Umfangsrichtung eine zweite Lücke U2 auf. Diese zweite Lücke U2 wird durch die zweiten Empfängerleiterbahnen 1.1221 begrenzt. Der minimale Abstand L2 in Umfangsrichtung zwischen zwei zweiten Empfängerleiterbahnen 1.1221 im Bereich der zweiten Lücke U2 beträgt im vorgestellten Ausführungsbeispiel 5/8 λ2 (L2 = 5/8·λ2). In der zweiten Lücke U2 sind also keine periodisch verlaufenden zweiten Empfängerleiterbahnen 1.1221 angeordnet. Durch die zweite Lücke U2 verlaufen mit radialer Richtungskomponente zweite Anschlussleiterbahnen 1.126, die jeweils mit einer der vierten Empfängerleiterbahnen 1.1241 elektrisch verbunden sind. Die zweiten Anschlussleiterbahnen 1.126 verlaufen in z-Richtung übereinander und wechselweise in der dritten Lage E und in der vierten Lage F der Leiterplatte 1.1 zur Vermeidung von Störeinkopplungen.

Die erste Empfängerspur 1.112 liefert Positionssignale mit einer höheren Auflösung als die dritte Empfängerspur 1.114, insbesondere weil die erste Periodenlänge λ1 kleiner ist als die dritte Periodenlänge λ3. Die erste Detektoreinheit 1.11 weist also eine höher auflösende innen liegende erste Empfängerspur 1.112 und eine weniger hoch auflösende außen liegende dritte Empfängerspur 1.114 auf, die von der ersten Lücke U1 unterbrochen ist. Die zweite Detektoreinheit 1.12 weist mit der zweiten Empfängerspur 1.122 im Vergleich zur vierten Empfängerspur 1.124 eine höher auflösende außen liegende Empfängerspur 1.112 auf, wobei die zweite Empfängerspur 1.122 von der zweiten Lücke U2 unterbrochen ist. Die erste Lücke U1 ist in Umfangsrichtung in einem Winkel γ (Figur 4) versetzt zur zweiten Lücke U2 angeordnet.

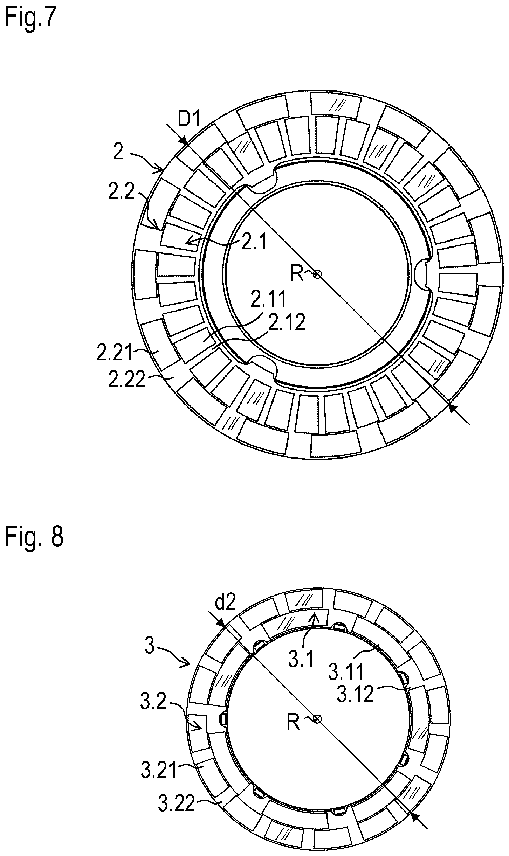

In der Figur 7 ist das erste Skalenelement 2 in einer Draufsicht gezeigt. Das zweite Skalenelement 3 ist in der Figur 8 ebenfalls in einer Draufsicht dargestellt. Die Skalenelemente 2, 3 weisen eine scheibenförmige Gestalt auf, wobei das erste Skalenelement 2 einen ersten Durchmesser D1 aufweist und das zweite Skalenelement 3 einen zweiten Durchmesser d2. Der erste Durchmesser D1 ist größer als der zweite Durchmesser d2 (D1 > d2).

Die Skalenelemente 2, 3 bestehen jeweils aus einem Substrat, welches im dargestellten Ausführungsbeispiel aus Epoxydharz hergestellt ist und auf denen jeweils zwei Teilungsspuren 2.1, 2.2; 3.1, 3.2 angeordnet sind. Die Teilungsspuren 2.1, 2.2; 3.1, 3.2 sind ringförmig ausgebildet und bezüglich der Achse R konzentrisch mit unterschiedlichem Durchmesser auf dem Substrat angeordnet. Die Teilungsspuren 2.1, 2.2; 3.1, 3.2 umfassen Teilungsstrukturen bestehend aus jeweils einer periodischen Abfolge von alternierend angeordneten elektrisch leitfähigen Teilungsbereichen 2.11, 2.21; 3.11, 3.21 und nichtleitfähigen Teilungsbereichen 2.12, 2.22; 3.12, 3.22. Als Material für die elektrisch leitfähigen Teilungsbereiche 2.11, 2.21; 3.11, 3.21 wurde im gezeigten Beispiel Kupfer auf das Substrat aufgebracht. In den nichtleitfähigen Teilungsbereichen 2.12, 2.22; 3.12, 3.22 wurde das Substrat dagegen nicht beschichtet. Durch die Anordnung mit jeweils zwei Teilungsspuren 2.1, 2.2; 3.1, 3.2 können die Winkelstellungen der Skalenelemente 2, 3 jeweils absolut bestimmt werden. Die innere Teilungsspur 2.1 des ersten Skalenelements 2 weist die größte Anzahl von Teilungsbereichen 2.11, 2.12 entlang einer Umfangslinie auf, so dass durch diese die größte Auflösung bezüglich der Messung der Winkelstellung erzielbar ist.

Im zusammengebauten Zustand gemäß der Figur 1 stehen sich das Abtastelement 1 und die Skalenelemente 2, 3 jeweils mit axialem Abstand beziehungsweise Luftspalt gegenüber, so dass bei einer Relativdrehung zwischen den Skalenelementen 2, 3 und dem Abtastelement 1 in den Empfängerleiterbahnen 1.1121, 1.1141, 1.1221, 1.1241 jeweils ein von der jeweiligenWinkelposition abhängiges Signal durch Induktionseffekte erzeugbar ist. Voraussetzung für die Bildung von entsprechenden Signalen ist, dass die Erregerleiterbahnen 1.1111, 1.1131, 1.1151, 1.1211, 1.1231, 1.1251 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen 1.1111,1.1131, 1.1151,1.1211,1.1231,1.1251 als mehrere planar-parallele stromdurchflossene Einzel-Leiterbahnen ausgebildet. Das Abtastelement 1 weist eine elektronische Schaltung mit den elektronischen Bauteilen 1.2 auf, die über die Lagen E und F miteinander elektrisch verbunden sind. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleiterbahnen 1.1111, 1.1131, 1.1151, 1.1211, 1.1231, 1.1251 fließt. Somit werden die Erregerleiterbahnen 1.1111, 1.1131, 1.1151, 1.1211, 1.1231, 1.1251 durch ein und dasselbe Erregerkontrollelement bestromt. Dabei sind die Erregerspuren 1.111, 1.113, 1.115, 1.121, 1.123, 1.125 elektrisch in Serie geschaltet.

Werden die Erregerspuren 1.111, 1.113, 1.115, 1.121, 1.123, 1.125 in entsprechenden Stromrichtungen bestromt, so bildet sich um die Erregerleiterbahnen 1.1111, 1.1131, 1.1151, 1.1211, 1.1231, 1.1251 ein schlauch- bzw. zylinderförmig orientiertes elektromagnetisches Feld aus. Die Feldlinien des resultierenden elektromagnetischen Feldes verlaufen um die Erregerspuren 1.111, 1.113, 1.115, 1.121, 1.123, 1.125, wobei die Richtung der Feldlinien in bekannter Art und Weise von der Stromrichtung in den Erregerleiterbahnen 1.1111, 1.1131, 1.1151, 1.1211, 1.1231, 1.1251 abhängt. Im Bereich der leitfähigen Teilungsbereiche 2.11, 2.21; 3.11, 3.21 werden Wirbelströme induziert, so dass jeweils eine von der Winkelstellung abhängige Modulation des Feldes erreicht wird. Entsprechend kann durch die Empfängerspuren 1.112, 1.114, 1.122, 1.124 jeweils die relative Winkelstellung gemessen werden. Die Paare von Empfängerleiterbahnen 1.1121,1.1141, 1.1221, 1.1241 sind innerhalb ihrer Empfängerspur 1.112, 1.114, 1.122, 1.124 so angeordnet, dass diese jeweils um 90° phasenversetzte Signale liefern, so dass auch eine Bestimmung der Drehrichtung vorgenommen werden kann. Die Signale, die von den Empfängerspuren 1.112, 1.114, 1.122, 1.124 erzeugt werden, werden mit Hilfe von einigen der elektronischen Bauteile 1.2, die eine Auswerteschaltung bilden, weiterverarbeitet. Die Signale der ersten Empfängerspur 1.112 liefern bei der Abtastung der inneren Teilungsspur 2.1 des ersten Skalenelements 2 die größte beziehungsweise feinste Auflösung der Winkelstellung.

Durch die erste Abschirmschicht 1.13 und die zweite Abschirmschicht 1.14 kann eine negative Beeinflussung der beiden Detektoreinheiten 1.11, 1.12 im Hinblick auf die Messgenauigkeit weitgehend verhindert werden. Insbesondere wird ein unzulässig hohes Maß an Übersprechsignalen verhindert aber gleichzeitig eine allzu große Dämpfung der Erregerfelder vermieden. Zudem wird die elektromagnetische Störung der Detektoreinheiten 1.11, 1.12 durch die elektronischen Bauteile 1.2 oder aus externen Quellen unterbunden.

## Patentansprüche

1. Abtastelement (1) für eine induktive Positionsmesseinrichtung, das eine Leiterplatte (1.1) umfasst, wobei die Leiterplatte (1.1)
- eine erste Detektoreinheit (1.11) umfasst, die eine erste Empfängerspur (1.112) und eine dritte Empfängerspur (1.114) aufweist,
- eine zweite Detektoreinheit (1.12) umfasst, die eine zweite Empfängerspur (1.122) und eine vierte Empfängerspur (1.124) aufweist, wobei
die Leiterplatte (1.1) eine geometrische Mittenebene (M) aufweist, welche zwischen den Detektoreinheiten (1.11, 1.12) zu liegen kommt, wobei
die Empfängerspuren (1.112, 1.114, 1.122, 1.124) um eine Achse (R) in Umfangsrichtung umlaufend angeordnet sind, wobei die dritte Empfängerspur (1.114) radial außen bezüglich der ersten Empfängerspur (1.112) verläuft und die zweite Empfängerspur (1.122) radial außen bezüglich der vierten Empfängerspur (1.124) verläuft und
- die erste Empfängerspur (1.112) erste Empfängerleiterbahnen (1.1121),
- die zweite Empfängerspur (1.122) zweite Empfängerleiterbahnen (1.1221),
- die dritte Empfängerspur (1.114) dritte Empfängerleiterbahnen (1.1141) und
- die vierte Empfängerspur (1.124) vierte Empfängerleiterbahnen (1.1241) umfasst, wobei
die Empfängerleiterbahnen (1.1121, 1.1221, 1.1141, 1.1241) jeweils einen periodischen Verlauf aufweisen, wobei
die dritte Empfängerspur (1.114) entlang ihrer Erstreckung in Umfangsrichtung eine erste Lücke (U1) aufweist, die durch die dritten Empfängerleiterbahnen (1.1141) begrenzt ist und
die zweite Empfängerspur (1.122) entlang ihrer Erstreckung in Umfangsrichtung eine zweite Lücke (U2) aufweist, die durch die zweiten Empfängerleiterbahnen (1.1221) begrenzt ist, wobei
die erste Detektoreinheit (1.11) eine erste Anschlussleiterbahn (1.116) umfasst, die mit einer der ersten Empfängerleiterbahnen (1.1121) elektrisch verbunden ist und mit radialer Richtungskomponente durch die erste Lücke (U1) verläuft und
die zweite Detektoreinheit (1.12) eine zweite Anschlussleiterbahn (1.126) umfasst, die mit einer der vierten Empfängerleiterbahnen (1.1241) elektrisch verbunden ist und mit radialer Richtungskomponente durch die zweite Lücke (U2) verläuft.

2. Abtastelement (1) gemäß dem Anspruch 1, wobei die erste Lücke (U1) in Umfangsrichtung in einem Winkel (γ) versetzt zur zweiten Lücke (U2) angeordnet ist.

3. Abtastelement (1) gemäß einem der vorhergehenden Ansprüche, wobei die Leiterplatte (1.1) mehrlagig ausgestaltet ist, wobei
die erste Detektoreinheit (1.11) in einer ersten Lage (A) und in einer zweiten Lage (B) der Leiterplatte (1.1) angeordnet ist
die zweite Detektoreinheit (1.12) in einer dritten Lage (E) und in einer vierten Lage (F) der Leiterplatte (1.1) angeordnet ist.

4. Abtastelement (1) gemäß dem Anspruch 3, wobei die erste Anschlussleiterbahn (1.116) abschnittsweise im Wechsel in der ersten Lage (A) und in der zweiten Lage (B) der Leiterplatte (1.1) verläuft und / oder die zweite Anschlussleiterbahn (1.126) abschnittsweise im Wechsel der dritten Lage (E) und in der vierten Lage (F) der Leiterplatte (1.1) verläuft.

5. Abtastelement (1) gemäß einem der vorhergehenden Ansprüche, wobei die Leiterplatte (1.1) elektronische Bauteile (1.2) umfasst, wobei die zweite Detektoreinheit (1.12) und zumindest eines der elektronischen Bauteile (1.2) auf derselben Seite der Leiterplatte (1.1) angeordnet sind.

6. Abtastelement (1) gemäß dem Anspruch 5, wobei die erste Detektoreinheit (1.11), insbesondere die erste Anschlussleiterbahn (1.116), über eine Durchkontaktierung (1.15) mit dem zumindest einem elektronischen Bauteil (1.2) elektrisch verbunden ist, wobei die Durchkontaktierung (1.15) radial außerhalb der zweiten Empfängerspur (1.122) angeordnet ist.

7. Abtastelement (1) gemäß einem der vorhergehenden Ansprüche, wobei sich die erste Lücke (U1) in Umfangsrichtung über eine erste Länge (L1) erstreckt und die dritten Empfängerleiterbahnen (1.1141) einen periodischen Verlauf mit einer dritten Periodenlänge (λ3) aufweisen, wobei gilt: L1 ≥ 1/8·λ3.

8. Abtastelement (1) gemäß einem der vorhergehenden Ansprüche, wobei sich die zweite Lücke (U2) in Umfangsrichtung über eine zweite Länge (L2) erstreckt und die zweiten Empfängerleiterbahnen (1.1221) einen periodischen Verlauf mit einer zweiten Periodenlänge (λ2) aufweisen, wobei gilt: L2 ≥ 1/8·λ2.

9. Abtastelement (1) gemäß einem der vorhergehenden Ansprüche, wobei die ersten Empfängerleiterbahnen (1.1121) einen periodischen Verlauf mit einer ersten Periodenlänge (λ1) aufweisen und die dritten Empfängerleiterbahnen (1.1141) einen periodischen Verlauf mit einer dritten Periodenlänge (λ3) aufweisen, wobei die erste Periodenlänge (λ1) kleiner oder gleich der dritten Periodenlänge (λ3) ist.

10. Abtastelement (1) gemäß dem Anspruch 9, wobei die zweiten Empfängerleiterbahnen (1.1221) einen periodischen Verlauf mit einer zweiten Periodenlänge (λ2) aufweisen und die vierten Empfängerleiterbahnen (1.1241) einen periodischen Verlauf mit einer vierten Periodenlänge (λ4) aufweisen, wobei die erste Periodenlänge (λ1) kleiner oder gleich der zweiten, dritten und vierten Periodenlänge (λ2, λ3, λ4) ist.

11. Abtastelement (1) gemäß einem der vorhergehenden Ansprüche, wobei die zweiten Empfängerleiterbahnen (1.1221) einen periodischen Verlauf mit einer zweiten Periodenlänge (λ2) aufweisen und die vierten Empfängerleiterbahnen (1.1241) einen periodischen Verlauf mit einer vierten Periodenlänge (λ4) aufweisen, wobei die zweite Periodenlänge (λ2) kleiner oder gleich der vierten Periodenlänge (λ4) ist.

12. Abtastelement (1) gemäß einem der vorhergehenden Ansprüche, wobei die erste Detektoreinheit (1.11) eine erste Erregerspur (1.111) und die zweite Detektoreinheit (1.12) eine zweite Erregerspur (1.121) aufweist.

13. Induktive Positionsmesseinrichtung umfassend ein Abtastelement (1) gemäß einem der vorhergehenden Ansprüche sowie einem ersten Skalenelement (2) und einem zweiten Skalenelement (3), wobei die Skalenelemente (2, 3) in einer dritten Richtung (z), die orthogonal zur Mittenebene orientiert ist, beabstandet beidseits der Leiterplatte (1.11) angeordnet sind.

14. Induktive Positionsmesseinrichtung gemäß dem Anspruch 13, wobei das erste Skalenelement (2) einen ersten Durchmesser (D1) aufweist und das zweite Skalenelement (3) einen zweiten Durchmesser (d2) aufweist und der erste Durchmesser (D1) größer ist als der zweite Durchmesser (d2).

## Claims

1. Scanning element (1) for an inductive position measurement device, said scanning element comprising a circuit board (1.1), wherein the circuit board (1.1)
- comprises a first detector unit (1.11), which has a first receiver track (1.112) and a third receiver track (1.114),
- comprises a second detector unit (1.12), which has a second receiver track (1.122) and a fourth receiver track (1.124), wherein
the circuit board (1.1) has a geometric middle plane (M) which comes to rest between the detector units (1.11, 1.12), wherein
the receiver tracks (1.112, 1.114, 1.122, 1.124) are arranged rotatably about an axis (R) in the circumferential direction, wherein the third receiver track (1.114) runs radially externally with respect to the first receiver track (1.112) and the second receiver track (1.122) runs radially externally with respect to the fourth receiver track (1.124) and
- the first receiver track (1.112) comprises first receiver conductor tracks (1.1121),
- the second receiver track (1.122) comprises second receiver conductor tracks (1.1221),
- the third receiver track (1.114) comprises third receiver conductor tracks (1.1141) and
- the fourth receiver track (1.124) comprises fourth receiver conductor tracks (1.1241), wherein
the receiver conductor tracks (1.1121, 1.1221, 1.1141, 1.1241) each have a periodic profile, wherein
the third receiver track (1.114) has a first gap (U1) along its extent in the circumferential direction, which first gap is delimited by the third receiver conductor tracks (1.1141) and
the second receiver track (1.122) has a second gap (U2) along its extent in the circumferential direction, which second gap is delimited by the second receiver conductor tracks (1.1221), wherein
the first detector unit (1.11) comprises a first connection conductor track (1.116) that is electrically connected to one of the first receiver conductor tracks (1.1121) and runs through the first gap (U1) with a radial direction component, and
the second detector unit (1.12) comprises a second connection conductor track (1.126) that is electrically connected to one of the fourth receiver conductor tracks (1.1241) and runs through the second gap (U2) with a radial direction component.

2. Scanning element (1) according to Claim 1, wherein the first gap (U1) is arranged in a manner offset from the second gap (U2) by an angle (γ) in the circumferential direction.

3. Scanning element (1) according to either of the preceding claims,
wherein the circuit board (1.1) is of multilayer design, wherein
the first detector unit (1.11) is arranged in a first layer (A) and in a second layer (B) of the circuit board (1.1),
the second detector unit (1.12) is arranged in a third layer (E) and in a fourth layer (F) of the circuit board (1.1) .

4. Scanning element (1) according to Claim 3, wherein sections of the first connection conductor track (1.116) run alternately in the first layer (A) and in the second layer (B) of the circuit board (1.1) and/or sections of the second connection conductor track (1.126) run alternately in the third layer (E) and in the fourth layer (F) of the circuit board (1.1).

5. Scanning element (1) according to one of the preceding claims, wherein the circuit board (1.1) comprises electronic components (1.2), wherein the second detector unit (1.12) and at least one of the electronic components (1.2) are arranged on the same side of the circuit board (1.1).

6. Scanning element (1) according to Claim 5, wherein the first detector unit (1.11), in particular the first connection conductor track (1.116), is electrically connected to the at least one electronic component (1.2) by way of a plated through-hole (1.15), wherein the plated through-hole (1.15) is arranged radially outside the second receiver track (1.122).

7. Scanning element (1) according to one of the preceding claims, wherein the first gap (U1) extends over a first length (L1) in the circumferential direction and the third receiver conductor tracks (1.1141) have a periodic profile with a third period length (λ3), wherein it holds true that: L1 ≥ 1/8. λ3.

8. Scanning element (1) according to one of the preceding claims, wherein the second gap (U2) extends over a second length (L2) in the circumferential direction and the second receiver conductor tracks (1.1221) have a periodic profile with a second period length (λ2), wherein it holds true that: L2 ≥ 1/8· λ2.

9. Scanning element (1) according to one of the preceding claims, wherein the first receiver conductor tracks (1.1121) have a periodic profile with a first period length (λ1) and the third receiver conductor tracks (1.1141) have a periodic profile with a third period length (λ3), wherein the first period length (λ1) is less than or equal to the third period length (λ3).

10. Scanning element (1) according to Claim 9, wherein the second receiver conductor tracks (1.1221) have a periodic profile with a second period length (λ2) and the fourth receiver conductor tracks (1.1241) have a periodic profile with a fourth period length (λ4), wherein the first period length (λ1) is less than or equal to the second, third and fourth period length (λ2, λ3, λ4).

11. Scanning element (1) according to one of the preceding claims, wherein the second receiver conductor tracks (1.1221) have a periodic profile with a second period length (λ2) and the fourth receiver conductor tracks (1.1241) have a periodic profile with a fourth period length (λ4), wherein the second period length (λ2) is less than or equal to the fourth period length (λ4).

12. Scanning element (1) according to one of the preceding claims, wherein the first detector unit (1.11) has a first exciter track (1.111) and the second detector unit (1.12) has a second exciter track (1.121).

13. Inductive position measurement device comprising a scanning element (1) according to one of the preceding claims and a first scale element (2) and a second scale element (3), wherein the scale elements (2, 3) are arranged in a manner spaced on either side of the circuit board (1.11) in a third direction (z) oriented orthogonally to the middle plane.

14. Inductive position measurement device according to Claim 13, wherein the first scale element (2) has a first diameter (D1) and the second scale element (3) has a second diameter (d2) and the first diameter (D1) is greater than the second diameter (d2).

## Revendications

1. Élément palpeur (1) destiné à un dispositif de mesure de position inductif, comprenant une carte de circuit imprimé (1.1), dans lequel la carte de circuit imprimé (1.1)
- comprend une première unité de détection (1.11) comportant une première piste de réception (1.112) et une troisième piste de réception (1.114),
- une deuxième unité de détection (1.12) comportant une deuxième piste de réception (1.122) et une quatrième piste de réception (1.124), dans lequel
la carte de circuit imprimé (1.1) présente un plan médian géométrique (M) qui vient se placer entre les unités de détection (1.11, 1.12), dans lequel
les pistes de réception (1.112, 1.114, 1.122, 1.124) sont disposées de manière à entourer un axe (R) dans la direction circonférentielle, la troisième piste de réception (1.114) s'étendant radialement vers l'extérieur par rapport à la première piste de réception (1.112) et la deuxième piste de réception (1.122) s'étendant radialement vers l'extérieur par rapport à la quatrième piste de réception (1.124) et
- la première piste de réception (1.112) comprend des premières traces conductrices de réception (1.1121),
- la deuxième piste de réception (1.122) comprend des deuxièmes traces conductrices de réception (1.1221),
- la troisième piste de réception (1.114) comprend des troisièmes traces conductrices de réception (1.1141) et
- la quatrième piste de réception (1.124) comprend des quatrièmes traces conductrices de réception (1.1241), dans lequel
les traces conductrices de réception (1.1121, 1.1221, 1.1141, 1.1241) présentent respectivement une forme périodique, dans lequel
la troisième piste de réception (1.114) présente, le long de son extension dans la direction circonférentielle, un premier espace (U1) qui est délimité par les troisièmes traces conductrices de réception (1.1141) et
la deuxième piste de réception (1.122) présente, le long de son extension dans la direction circonférentielle, un deuxième espace (U2) qui est délimité par les deuxièmes traces conductrices de réception (1.1221), dans lequel la première unité de détection (1.11) comprend une première trace conductrice de connexion (1.116) qui est connectée électriquement à l'une des premières traces conductrices de réception (1.1121) et qui s'étend avec une composante directionnelle radiale à travers le premier espace (U1), et
la deuxième unité de détection (1.12) comprend une deuxième trace conductrice de connexion (1.126) qui est connectée électriquement à l'une des quatrièmes traces conductrices de réception (1.1241) et s'étend avec une composante directionnelle radiale à travers le deuxième espace (U2).

2. Élément palpeur (1) selon la revendication 1, dans lequel le premier espace (U1) est décalé d'un angle (γ) par rapport au deuxième espace (U2) dans la direction circonférentielle.

3. Élément palpeur (1) selon l'une des revendications précédentes, dans lequel la carte de circuit imprimé (1.1) est conçue en plusieurs couches, dans lequel
la première unité de détection (1.11) est disposée dans une première couche (A) et dans une deuxième couche (B) de la carte de circuit imprimé (1.1) et
la deuxième unité de détection (1.12) est disposée dans une troisième couche (E) et dans une quatrième couche (F) de la carte de circuit imprimé (1.1).

4. Élément palpeur (1) selon la revendication 3, dans lequel la première trace conductrice de connexion (1.116) s'étend par sections en alternance dans la première couche (A) et dans la deuxième couche (B) de la carte de circuit imprimé (1.1) et/ou la deuxième trace conductrice de connexion (1.126) s'étend par sections en alternance dans la troisième couche (E) et dans la quatrième couche (F) de la carte de circuit imprimé (1.1).

5. Élément palpeur (1) selon l'une des revendications précédentes, dans lequel la carte de circuit imprimé (1.1) comprend des composants électroniques (1.2), la deuxième unité de détection (1.12) et au moins l'un des composants électroniques (1.2) étant disposés sur la même face de la carte de circuit imprimé (1.1).

6. Élément palpeur (1) selon la revendication 5, dans lequel la première unité de détection (1.11), en particulier la première trace conductrice de connexion (1.116), est reliée électriquement à l'au moins un composant électronique (1.2) par l'intermédiaire d'un contact traversant (1.15), le contact traversant (1.15) étant disposé radialement à l'extérieur de la deuxième piste de réception (1.122).

7. Élément palpeur (1) selon l'une des revendications précédentes, dans lequel le premier espace (U1) s'étend circonférentiellement sur une première longueur (L1) et les troisièmes traces conductrices de réception (1.1141) présentent une forme périodique ayant une troisième longueur de période (λ3), avec : L1 ≥ 1/8·λ3.

8. Élément palpeur (1) selon l'une des revendications précédentes, dans lequel le deuxième espace (U2) s'étend circonférentiellement sur une deuxième longueur (L2) et les deuxièmes traces conductrices de réception (1.1221) présentent une forme périodique ayant une deuxième longueur de période (λ2), avec : L2 ≥ 1/8·λ2.

9. Élément palpeur (1) selon l'une des revendications précédentes, dans lequel les premières traces conductrices de réception (1.1121) présentent une forme périodique ayant une première longueur de période (λ1) et les troisièmes traces conductrices de réception (1.1141) présentent une forme périodique ayant une troisième longueur de période (λ3), la première longueur de période (λ1) étant inférieure ou égale à la troisième longueur de période (λ3).

10. Élément palpeur (1) selon la revendication 9, dans lequel les deuxièmes traces conductrices de réception (1.1221) présentent une forme périodique ayant une deuxième longueur de période (λ2) et les quatrièmes traces conductrices de réception (1.1241) présentent une forme périodique ayant une quatrième longueur de période (λ4), la première longueur de période (λ1) étant inférieure ou égale aux deuxième, troisième et quatrième longueurs de période (λ2, λ3, λ4).

11. Élément palpeur (1) selon l'une des revendications précédentes, dans lequel les deuxièmes traces conductrices de réception (1.1221) présentent une forme périodique ayant une deuxième longueur de période (λ2) et les quatrièmes traces conductrices de réception (1.1241) présentent une forme périodique ayant une quatrième longueur de période (λ4), la deuxième longueur de période (λ2) étant inférieure ou égale à la quatrième longueur de période (λ4).

12. Élément palpeur (1) selon l'une des revendications précédentes, dans lequel la première unité de détection (1.11) comporte une première piste d'excitation (1.111) et la deuxième unité de détection (1.12) comporte une deuxième piste d'excitation (1.121).

13. Dispositif de mesure de position inductif comprenant un élément palpeur (1) selon l'une des revendications précédentes ainsi qu'un premier élément d'échelle (2) et un deuxième élément d'échelle (3), les éléments d'échelle (2, 3) étant disposés espacés de part et d'autre de la carte de circuit imprimé (1.11) dans une troisième direction (z) qui est orientée orthogonalement au plan médian.

14. Dispositif de mesure de position inductif selon la revendication 13, dans lequel le premier élément d'échelle (2) présente un premier diamètre (D1) et le deuxième élément d'échelle (3) présente un deuxième diamètre (d2), et le premier diamètre (D1) est supérieur au deuxième diamètre (d2).
